# EUROPEAN PATENT APPLICATION

(11) **EP 0 795 735 A1**
(43) Date of publication of application: **17.09.1997**
(21) Application number: 97200766.0
(22) Date of filing: 14.03.1997
(51) Int. Cl.: G01B 5/207

(54) **Tool for marking a planar profile on a segment**

(30) Priority: 14.03.1996 NL 1002610; 24.05.1996 NL 1003209
(71) Applicant: Wehnes, Edward, 2014 ED Haarlem (NL); Wehnes, Marvin Antoine, 2061 EL Bloemendaal (NL)
(72) Inventor: Wehnes, Edward, 2014 ED Haarlem (NL); Wehnes, Marvin Antoine, 2061 EL Bloemendaal (NL)
(74) Representative: Metman, Karel Johannes

(57) **Abstract**

The invention relates to a tool with which a planar profile may be marked on segments, such as for example tiles. As a result the segments may be made fit in a simple manner between a profile and co-planar segments already present.

The profile is impressed in a profile measuring device which can be fixed relative to a reference member, then the reference member is positioned with respect to the segment to be marked, whereafter it is marked by means of the profile measuring device and then the profile can be sawed out.

## Description

The invention relates to a tool for marking a planar profile on a segment to be marked, which can be positioned in a manner determined by other co-planar segment or edges.

Such tools may for example be used for transferring profiles of a wall or of a door frame to the tiles of a floor to be laid up to the wall.

The prior art tools are not handy or unsuited for this purpose. This turns out particularly if a floor of for example square tiles should be laid with the joint diagonally to the wall. It has been found that marking the profile is very time consuming. Similar problems are encountered with laying a wall cover or ceiling sheets, since also there fitting segments to be applied to segments already applied, to edges and to the profile may lead to problems.

According to the invention, the tool comprises a profile measuring device mounted in a holder for measuring the profile in that plane and a reference member adapted to be positioned in that plane relative to the other co-planar segment or edges and relative to the segment to be marked, as well as positioning means with which the profile measuring device and reference member can be fixed relatively.

By being able to fix the position of a profile for example relative to an edge of an already laid out part of a floor by means of the profile measuring device and the reference member, and also by being able to position the reference member relative to the tile to be laid between the edge of the floor and the profile, it is possible to mark the tile or any other segment by means of the profile measuring device. As a result a lot of time is saved with marking the segment.

The profile measuring device which can be used in the invention is known from EP-A 0 204 407. It has turned out that the prior art profile measuring device cannot be positioned accurately enough with respect to the material to be marked, without using a gauge or measuring tape. Also if a gauge or measuring tape is used to determine the position, then the measurement is still difficult and the operation is slow and time consuming. By using the profile measuring device in accordance with the invention, it can be used by a large group of users.

According to a further improvement, the profile measuring device and the reference member are interconnected within a plane by means of two co-planar intermediate pieces.

This makes the tool easy to handle and to position. In accordance with an other embodiment of the invention, the holder comprises adjustable stops to which the reference member can be positioned.

The advantage of this embodiment is that the reference member may be a loose part which may be positioned on a floor or against a wall in an easy way, whereafter the profile may be marked by a profile measuring device positioned in a holder.

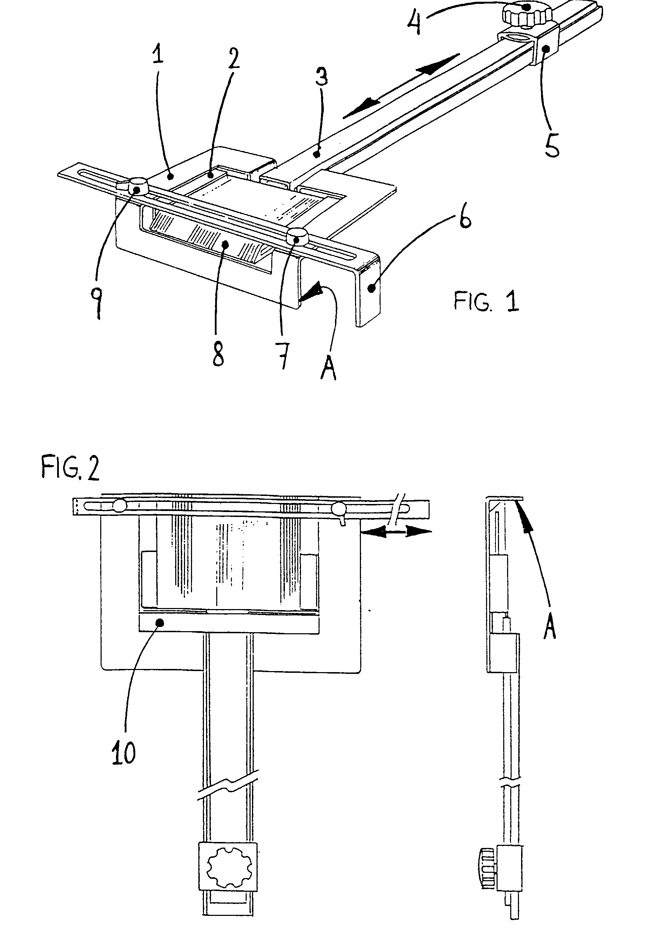

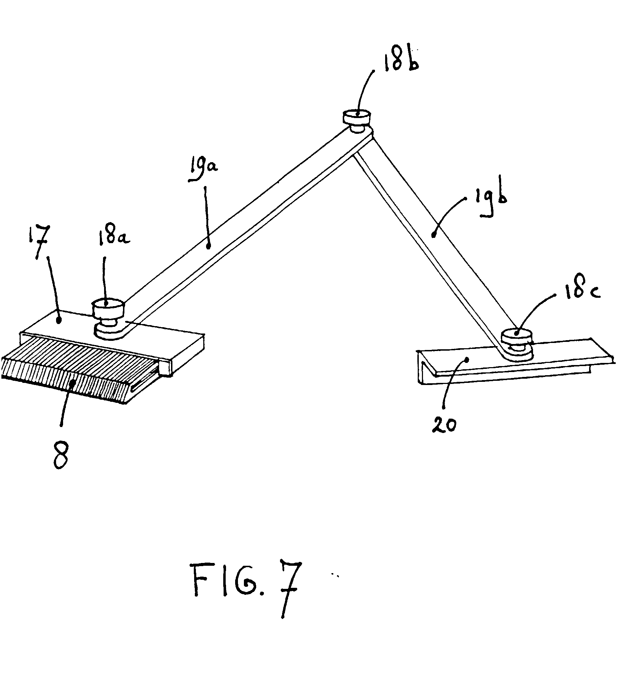

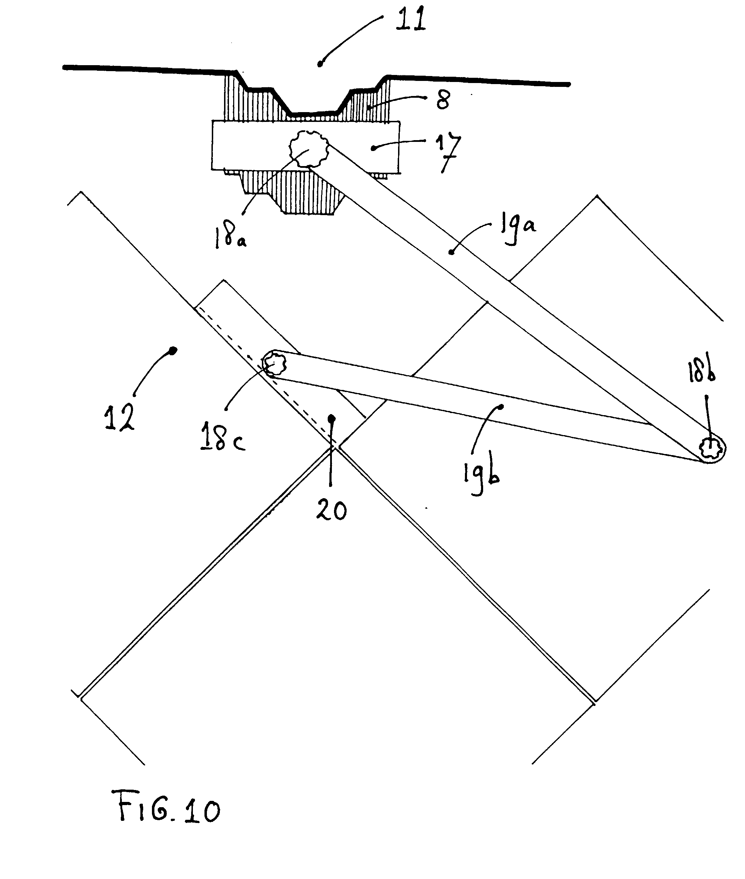

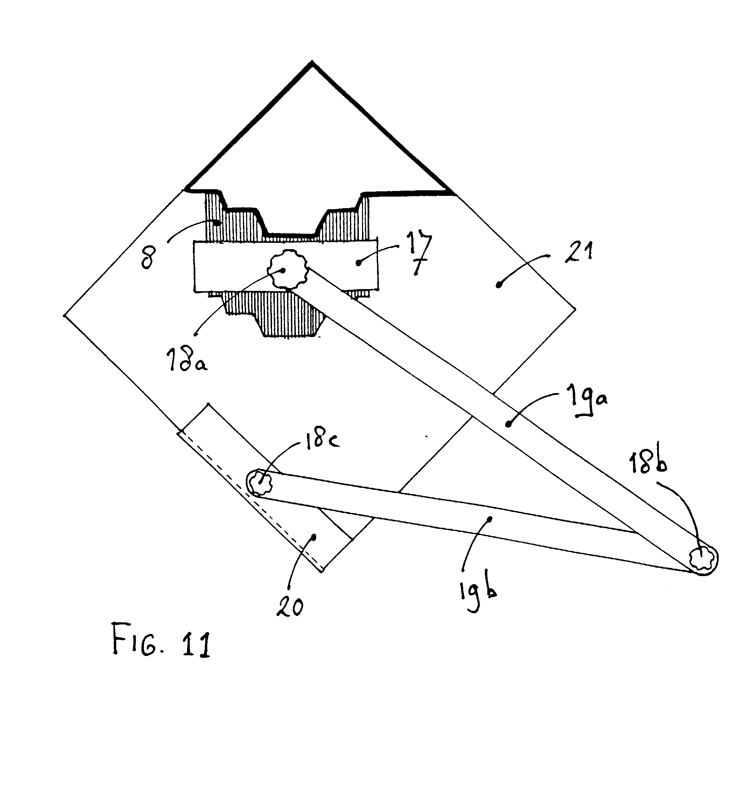

The invention will hereafter be further explained by means of several examplary embodiments shown in the drawing. Fig. 1-6 show a first embodiment and illustrate the use thereof and Fig. 7-11 show a second embodiment.

In the various Figures like parts are preferably indicated by like reference numerals.

In Fig. 1 and 2, the various parts of the tool according to the first embodiment are shown in perspective, upper and side views. A frame 1 is mounted square on a rail system 3 of which the position, obtained after extending a sliding portion of the rail system 3, may be fixed by a clamping screw 4 and a rail clamp 5. By means of a measuring arm 6, mounted on the frame 1 by a screw 7 and a clamp 9, the position of a profile measuring device, constructed as a measuring comb 8, is fixed relative to a reference plane in a direction perpendicularly to the sliding direction of the rail system 3 to which the profile measuring device can be placed.

Perpendicularly to the extendable portion of the rail system 3 there is mounted a housing 2 in which the measuring comb 8 is clamped. The frame 1 includes a correction lath 10 to which the measuring comb 8 is pressed after a measurement so that it is pushed back to the starting position.

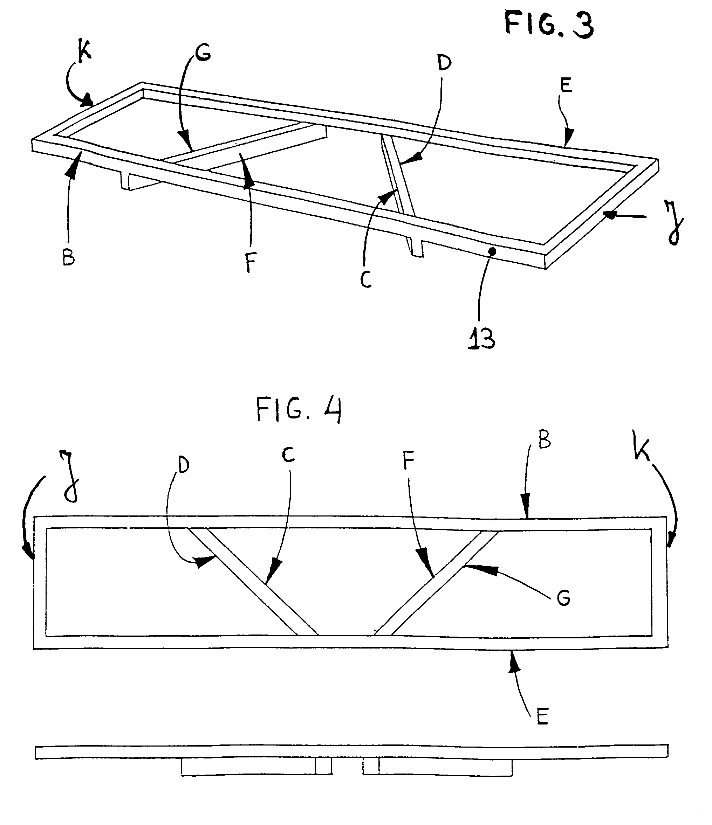

Both Figs. also show a surface A with which the profile measuring device can be positioned against a reference face of an auxiliary device 13 (see Fig. 3).

Fig. 3 and 4 show the auxiliary device 13 in perspective, upper and side views. The surfaces which are used to position the auxiliary device 13 are indicated with the following characters:
Surfaces C and F are used to position the auxiliary device 13 with repect to external corners/tips of diagonally laid tile floors, whereafter surface A (Figure 1) is placed against the surface E to perform the measurement.
Surfaces D and G are used to position the auxiliary device 13 with respect to internal corners/tips of diagonally laid tile floors, whereafter surface A (Figure 1) is placed against surface B to perform the measurement.
Surfaces J and K are used to position the measuring arm 6.

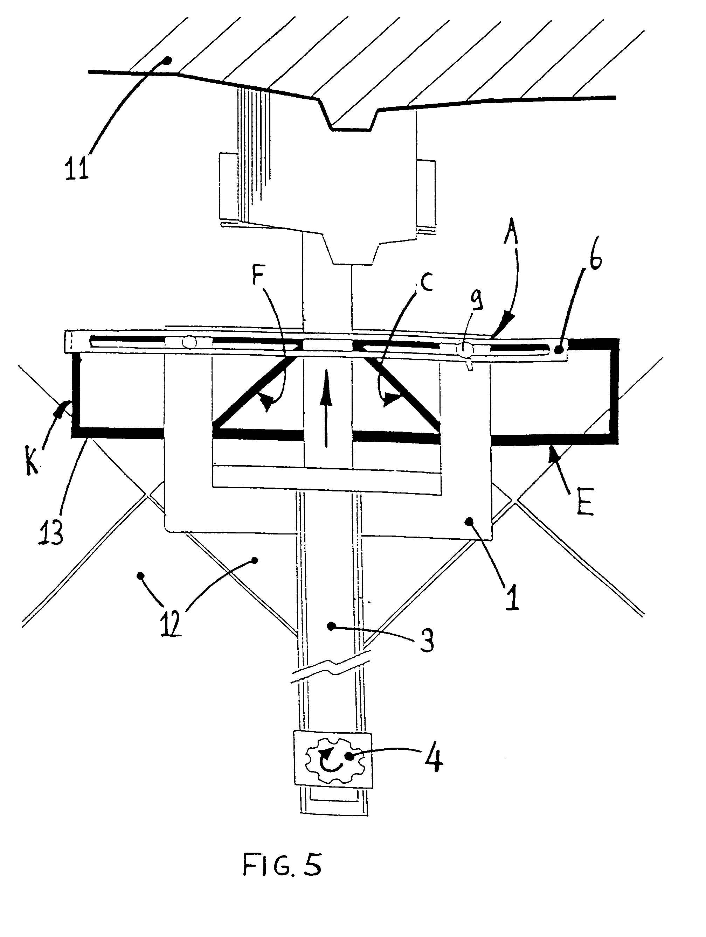

Fig. 5 shows in a plan view one of the possible measuring arrangements of a floor tile and the tool, i.e. for measuring a profile 11 which is part of a wall in case of a diagonal floor 12. First of all, the auxiliary device 13 for diagonal floor tiles is used to determine the positon of the reference surfaces E and K. Then, the tool is positioned relative to the auxiliary device 13 by means of surface A and parallel to the profile to be measured. The position of the tool is fixed by the measuring arm 6 with respect to surface K of the auxiliary device 13 by fixing the clamp 9. Through the rail system 3, the measuring comb 8 is impressed by the profile 11 to be measured. The clamping screw 4 of the rail clamp 5 is tightened in order to fix the position of the extendible portion of the rail system 3.

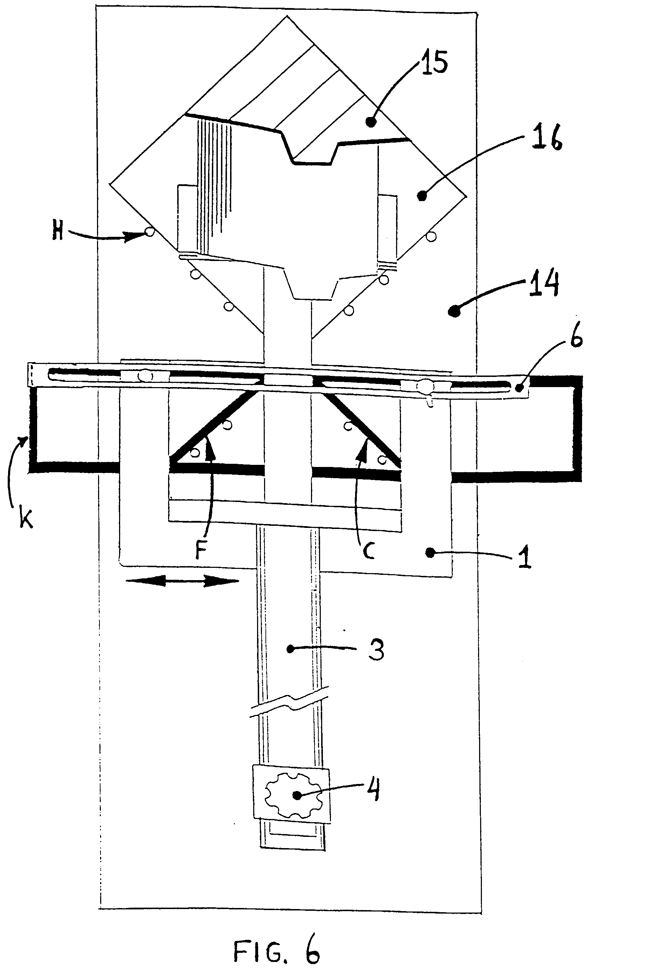

Fig. 6 shows the next step in the use of the tool of Fig. 5, that is by a plan view of the tool when the measure profile 11 is marked on a floor tile 16. On a lid 14 of the box in which the tool may be stored, there are a plurality of vertically upright pins H forming an angle of 45 degrees relative to the edges of the lid 14, this pins H serving as reference planes for the floor tiles 16 and the auxiliary device 13. The tool is placed against the auxiliary device 13 and is positioned over the floor tile 16. It is now possible to mark the measured device on the floor tile 16 in an accurate manner, whereafter it can be sawed out.

An embodiment of the tool according to a second example is shown in Fig. 7-11.

The tool is made of a modified housing 17 over which a strip and non-slidable side of the measuring comb 18 is positioned, and in the centre of this strip there is an adjustable turning knob 18a. The housing can be rotated about the axis of the turning knob 18a and may be clamped relative to the upper side of a first reference arm 19a. On the other side of the reference arm 19a there is mounted a similar turning knob 18e to allow the first reference arm 19a to be clamped relative to the upper side of a second reference arm 19b. To the end of this second reference arm 19b there is mounted a similar turning knob 18c so that a reference member 20 can be clamped to the second reference arm 19b. The reference member 20 is an angle strip adapted to be positioned with respect to a reference. By collapsing the tool, after adjusting the turning knobs 18a/b/c/ into the non-clamping position, the tool will be brought back to the starting position after a measurement has been performed.

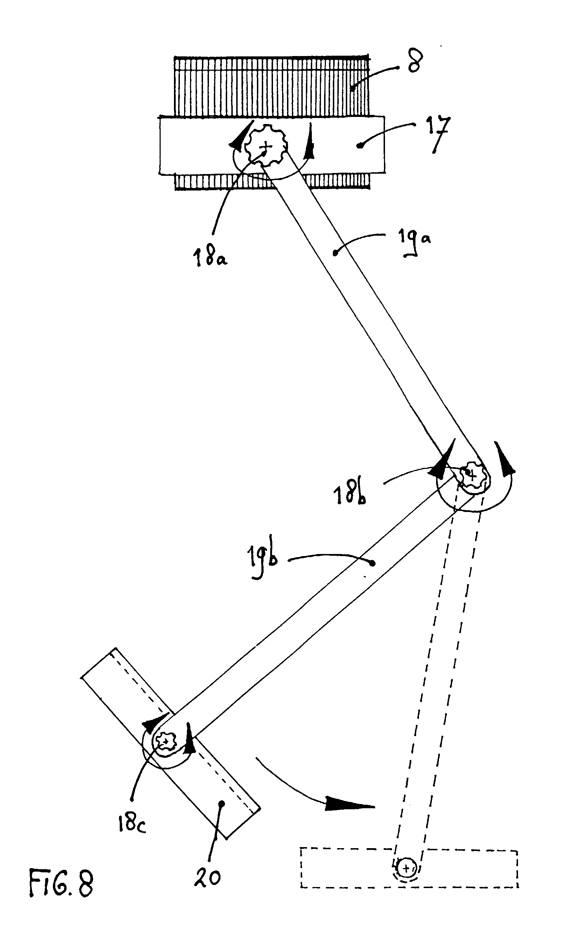

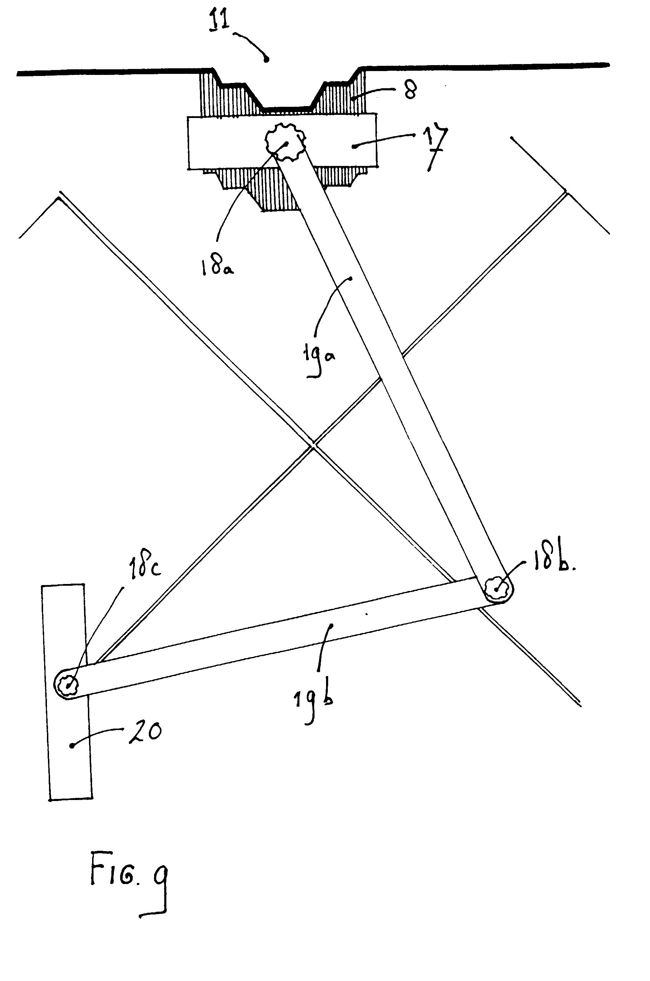

The method according to this embodiment of the tool as shown in Fig. 7 and 8 is as follows: first of all (see Fig. 9) the measuring comb 8 is pressed into the profile 11 to be measured. The reference member 20 is used to find a reference plane bringing the first reference arm 19a and the second reference arm 19b automatically into position. Thereafter the turning knobs 18a/b/c on the housing 17, the first reference arm 19a and the second reference arm 19b and the reference member 20 are brought to the clamping position. A corresponding reference plane is searched on the segment 21, for example a tile, to be marked. After the tool (Fig. 7 and 8) is brought into position, the segment 21 can be marked and the desired profile can be sawed out.

Depending on the desired use, the auxiliary device 13 or the reference member 20 may be equipped with auxiliary means not further shown by which the width of the joints between the tiles and the profiles is taken into account when marking the profile.

The tool is here illustrated in use for a tile floor. Also other floors build from segments, such as for example parquet floors or floors having carpet tiles, the tool is very suitable.

The tool may also be used when walls are tiled or when carpet tiles are attached to a wall.

Instead of the measuring comb, it is of course also possible to use another type of profile measuring device, for example including plastic material or the like. The pivoting arms may for example be replaced by a deformable arm or articulated arm or such adjustable and adaptable positioning means. Also other variations are conceivable.

## Claims

1. Tool for marking a planar profile (11) on a segment (16;21) to be marked, which is positioned co-planar and determined by other co-planar segments (12) or edges, comprising a profile measuring device (8) mounted in a holder (1;17) voor measuring the profile in that plane and a reference member (13;20) adapted to be positioned in that plane relative to the other co-planar segment (12) or edges and relative to the segment (16;21) to be marked, as well as positioning means (3-7,9,A; 18,19) with which the profile measuring device and reference member can be fixed relatively.

2. Tool according to claim 1, **characterized** in that the profile measuring device and the reference member are interconnected by means of at least two co-planar, pivotable intermediate pieces (19a, 19b) as positioning means.

3. Tool according to claim 1, **characterized** in that the holder includes adjustable stops (A, 6) to which the reference member may be positioned.

4. Method for marking a planar profile (11) on a segment (16;21) to be marked and which may be positioned within that plane determined by other co-planar segments (12) or edges, in which a profile measuring device (8) is pressed against the profile and positioning means connected thereto are adjusted and fixed in a position fixing the profile measuring device relative to a reference point and then the positioning means and the profile measuring device are placed in the same manner relative to the segment whereafter the profile is marked.
